# EUROPEAN PATENT APPLICATION

(11) **EP 3 910 257 A1**
(43) Date of publication of application: **17.11.2021**
(21) Application number: 20460047.2
(22) Date of filing: 23.12.2020
(51) Int. Cl.: F24F 7/10, F24F 12/00

(54) **WIRELESS VENTILATION SYSTEM SUPPLIED FROM INTEGRATED WIND-PHOTOVOLTAIC PANEL**

(30) Priority: 24.04.2020 PL 43368820
(71) Applicant: NEOKLIMA Sp. z o.o., 30-383 Kraków (PL); Adamski, Bartlomiej, 30-670 Kraków (PL)
(72) Inventor: Bartlomiej, Adamski, 30-670 Krakow (PL)

(57) **Abstract**

The subject of the invention is a wireless ventilation system with recuperation powered from an integrated photovoltaic-wind panel, built of individual, decentralized ventilation devices (1) and an exhaust fan (2) in one of the other rooms, e.g. a bathroom. The system is characterized by minimized power and electricity consumption by only a single fan (5) located in decentralized, individual ventilation devices (1). Decentralized, individual ventilation devices (1), despite the fact that they are equipped with a single exhaust fan (5), allow the implementation of fresh air supply to the ventilated rooms and return air exhaust from the ventilated rooms with heat/cool recovery from the exhaust air. Due to the lack of ventilation ducts in ventilated rooms, the system is characterized by reduced energy consumption and pro-ecological character related to the reduced demand for materials for its production and using natural energy sources such as wind and sun. The lack of ventilation ducts does not require the use of a lowered suspended ceiling in ventilated rooms. The small dimensions of the system make the subject of the invention easy to adapt to new and existing buildings that require a ventilation system with reduced energy consumption. The source of the drive for the system is an integrated photovoltaic-wind panel (11), which uses free solar and wind energy in one element.

## Description

**The subject of the invention** is a wireless ventilation system with recuperation, understood as heat/cold recovery from air removed from the room, intended for ventilation of rooms with particular emphasis on single- and multi-family housing. The system is powered by a pro-ecological source of electricity, which is an integrated photovoltaic-wind panel.

**The purpose of the invention** is ventilation of rooms with heat/cold recovery while maintaining the minimum dimensions of devices and with a minimum power and electricity consumption. The system is based on individual, decentralized ventilation devices installed in each ventilated room, with the exception of bathroom, kitchen or hall assuming that a separate exhaust fan is mounted in one of them. Each device uses only one fan to perform the supply-return function with heat/cold recovery. Through integrated photovoltaic-wind panel renewable energy sources such as sun and wind are used to drive the fans.

The design and construction of individual, decentralized ventilation devices, as well as the way of their installation make this solution one of the most compact solutions of ventilation systems with recuperation with minimized power consumption. The total or significant share of electricity comes from renewable, solar and wind, energy sources, which are assimilated by an integrated photovoltaic-wind panel and, in the form of almost free electricity, are passed on to power the subject of the invention.

The patent No. 422831 concerning a single-duct ventilation system with recuperation, along the entire length of the installation, is known. This system is characterized by minimized power consumption by fans because only one fan works in it. However, in this solution it is necessary to run ventilation air ducts in the room. It is related to the excessive power consumption of the fan, which is caused by the resistance of air flowing through the ducts.

There are known solutions for decentralized push-pull ventilation devices, equipped with a ceramic exchanger and a single fan, in which the air is alternately removed and blown into the room by changing the direction of rotation. During the air exhaust from the room, the heat exchanger, with the storage mass, heats up from the removed air and after changing the fan direction of rotation, during the fresh air supply, the heat from the ceramic exchanger is transferred to the fresh air. Due to the alternating operation - supply and exhaust every 60-70 seconds - the efficiency of the fan and the efficiency of this type of ventilation system are reduced by half. If the door are closed to the ventilated room, ineffective ventilation of the room is possible through cyclical air supply and exhaust from the same point.

There are known solutions for separately mounted photovoltaic panels or wind turbines. The two components are not integrated and function as separate devices.

**The solution according to the invention** is characterized by the absence of ventilation ducts in the room, therefore no additional operating costs related to air transport and flow resistance are incurred. The system uses a single fan to support the natural circulation of air in the ventilated rooms. One fan consumes less energy than two fans, what is more, built in a short section of the ventilation channel, it has less flow resistance to overcome, which further reduces electric power consumption. The device and system performs continuous air exchange in the room and at the same time recovers heat/cold from the exhaust air. The system works effectively even when the door in the room is closed. The solution, according to the invention, is characterized by minimal power and electricity consumption while maintaining compact dimensions and aesthetic development. The system supports the natural air movement and does not disturb it (as it is during convection air heating in the room through convection heaters or with the use of window fan-coil units). The system meets the goals and requirements for modern residential construction, in particular related to the recovery of heat from the exhaust air. The system can be easily and quickly adapted to existing facilities equipped with gravity and mechanical exhaust ventilation systems, improving their energy performance.

The combination of a wind turbine and a photovoltaic panel in one device increases the obtainable natural energy inputs from the environment necessary to produce electricity to power the system.

The wireless ventilation system with heat recovery is built of decentralized individual ventilation devices, providing air supply and exhaust using only one fan, mounted in the external partition of each ventilated room and an exhaust fan mounted in one of the other rooms, such as a bathroom, kitchen or hall. The source of power for the system is a flat integrated photovoltaic-wind panel that converts the energy of wind and sun into electricity.

Single, individual and decentralized ventilation devices consist of a flat front supply-return panel mounted on the external wall, from internal side, of the ventilated room. The ventilation and recuperation micro-unit is ended on one side with a single air supply-return connector, and on the other side with a single air intake-exhaust connector. A special partition effectively separates the suction side from the supply side. The device from the outer side of the room partition is ended with a flat outdoor air intake-exhaust unit connected to the micro-unit air intake-exhaust connector. The supply-return front panel is connected to the supply-return connector of the micro-unit. There is only a single exhaust fan inside the micro-unit. In justified cases, in other versions of the invention, a single exhaust fan may be supported by an additional supply fan, also located inside the micro-unit. At the same time, heat recovery is carried out inside the micro-unit on the channels placed between the intake-exhaust and supply-return connector and spaces between them.

After switching on the exhaust fan in the micro-unit, the used air from the room is sucked in through the return air opening located in the supply-return panel. This air flows to the return air opening of the supply-return connector in the micro-unit, and then, through a set of elements inside the micro-unit, it flows out through the exhaust opening of the intake-exhaust connector and then through the exhaust opening of the intake-exhaust unit to the atmosphere. At the same time, due to the negative pressure generated in the room, fresh outdoor air is sucked in through an opening located on the perimeter of the intake-exhaust unit, and then flows through the elements inside the micro-unit, and then it flows out through the supply opening in the supply-return connector of the micro-unit and then through the supply opening, on the perimeter of the supply-return front panel, to the room.

The elements inside the micro-unit constitute an exhaust fan, appropriately and specially shaped channels and spaces between them enabling free air flow and heat exchange between two air streams.

The flat supply-return front panel has openings located next to each other in such a way, that for one version the exhaust opening or openings are located centrally or asymmetrically on the front part of the panel, and the return opening is a slot located on the perimeter of the panel. In another version, the supply opening is located along with the exhaust opening on the perimeter of the panel, the supply part being located on the opposite side to the return opening and both are separated from each other by specially profiled, internal partitions.

The flat intake-exhaust unit has a centrally or asymmetrically located exhaust opening or openings on the front wall, and the outdoor air intake opening is a slot located on the circumference of the intake-exhaust unit.

In one version, the supply-return connector in the micro-unit has the supply part located next to the return part and the two openings are separated from each other by a separating wall/diaphragm. In another version, the design of the supply-return connector is the shape of a centrally or asymmetrically located return opening or openings, on the perimeter of which, the supply opening is located. One version of the intake-exhaust connector has the shape of a centrally or asymmetrically located exhaust opening or openings, on the perimeter of which the intake opening is located. In another version, the connector has an intake located next to the exhaust and both parts are separated from each other by a separating wall/diaphragm.

The micro-unit is equipped with a single exhaust fan and a set of channels, allowing for the correct flow of both air streams in combination with the recovery of heat/cold from the return air. The exhaust fan is located, for one variant of micro-units, inside the exhaust-return air channel, and this channel is located centrally or asymmetrically in the outdoor air intake-supply channel ("pipe in a pipe"). In this version, the exhaust-return air channel is connected on one side to an asymmetrically or centrally located return opening in the exhaust-return connector of the micro-unit and runs to the exhaust opening located in the intake-exhaust connector on the other side of the micro-unit. The exhaust-return air channel in the section from the return opening to the suction opening of the exhaust fan, and in the section from the pressure opening of the fan and to the exhaust opening, can take the form of several small diameter channels. These channels are joined together into one collective channel , before the suction connector of the supply fan. On the discharge side of the supply fan, the collective exhaust air channel is split into several small diameter channels that run to several exhaust openings located in the intake-exhaust connector. For this version the entire exhaust unit runs inside the external air channel from the intake opening in the intake-exhaust connector to the supply opening in the supply-return connector of the micro-unit. Heat is transferred between the two air streams through a separating wall/diaphragm made of materials with high thermal conductivity. The separating partition may have the form of a specially corrugated, micro-ribbed and externally ribbed surface, or may have a micro-/macro-bubble surface.

In another version, the exhaust fan is located in the exhaust-return air channel, which runs alongside with the outdoor air supply-fresh air channel. The exhaust-return air channel inside the micro-unit is connected on one side to the return opening at the supply-return connector and runs to the exhaust opening in the intake-exhaust connector. In turn, a parallel outdoor air intake-supply channel runs from the intake opening of the intake-exhaust connector to the supply opening in the intake-exhaust connector. Both channels are separated along their entire length by a separating wall/diaphragm made of materials with high conductivity, through which heat is transferred between two air streams. The separating partition may be additionally corrugated, micro-ribbed or additionally ribbed on the outdoor air as well as on the exhaust air side. It can also have a micro- /macro-bubble surface on both sides.

In justified cases, the exhaust fan may be supported by the supply fan. This is the case when the resistances on the supply air side are too high. The supply air fan is then located in the outdoor air intake-supply channel, which is connected on one side to the intake opening in the intake-exhaust connector and on the other side to the supply opening in the supply-return connector. In this case, the heat exchange takes place similarly at the diaphragm separating both adjacent air streams.

Each ventilated room is equipped with a decentralized ventilation device. An additional exhaust fan placed in a bathroom, hall or kitchen creates a negative pressure in these room and also in adjoining rooms. Thus, the air is additionally sucked in from these adjoining rooms. The generated negative pressure, on the other side of the door of the ventilated rooms, supports the air circulation achieved by the exhaust fan in those rooms equipped with individual, decentralized ventilation devices. Outdoor air is supplied from the air supply openings of the supply-return front panel on its perimeter and then flows into the room in the negative pressure zones, created from the suction side. In this way, the entire room is ventilated. The return air goes to the return opening of the supply-return panel. As a result, turning on the fan in the bathroom or other room, a certain surplus of outdoor air, in relation to the air output removed from the ventilated rooms, periodically flows through the intake openings in decentralized individual ventilation devices. This excess air is removed by an exhaust fan located in one of the rooms: bathroom, kitchen or hall, apart from those with decentralized, individual ventilation devices.

An integrated photovoltaic-wind panel, e.g. located on the roof of the building, is made of a rectangular casing with photovoltaic panels placed on the outside on the upper surface. Inside the casing there are rotor and ventilation channels, the so-called wind traps, the task of which is to capture wind gusts and use its energy to rotate the rotors located centrally inside the casing and generating electricity.

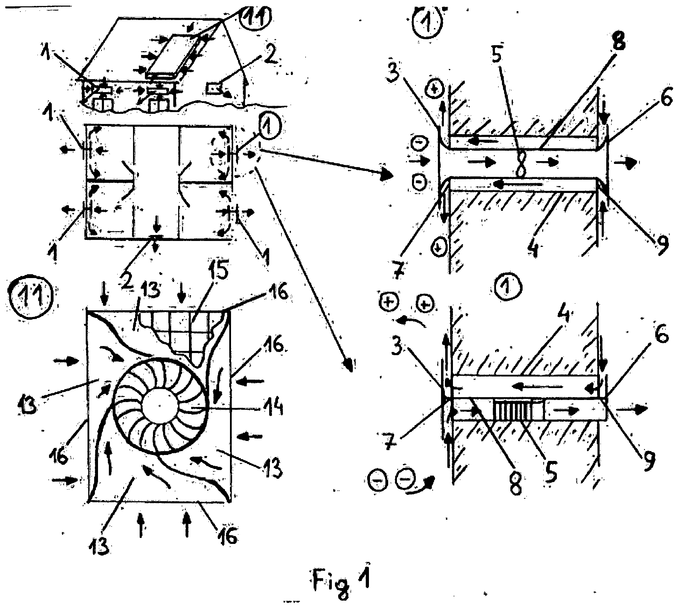

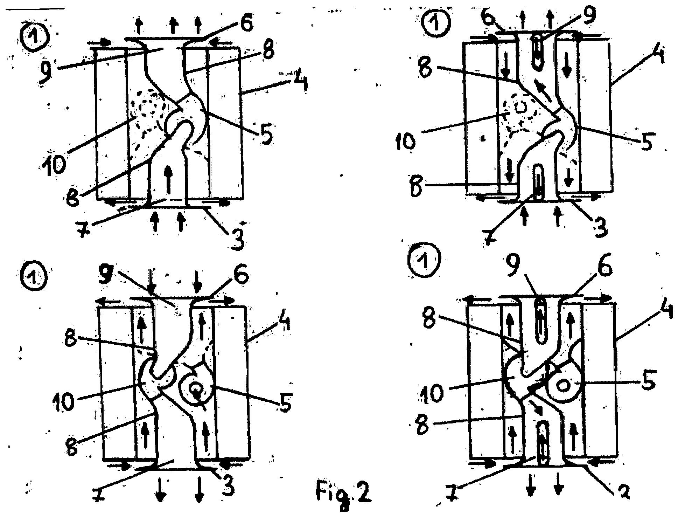

An example of the construction and the principle of operation of the invention are shown in Figure 1. The wireless ventilation system with recuperation shown in Fig. 1 consists of several individual, decentralized ventilation devices (1) mounted in external walls of ventilated rooms and an exhaust fan (2) located in another of the remaining rooms, i.e. bathroom, kitchen or hall. An individual, decentralized ventilation device (1) consists of a front supply-return panel (3), effectively separating the supply and return side, mounted on the external wall from the inside of the ventilated room; a micro-unit (4) which responsible for air transport and heat recovery, and mounted inside the external partition, equipped with a single exhaust fan (5), two connectors: outer air intake-exhaust (7) and air supply-return one (9); and the outdoor air intake-exhaust unit (6), mounted on the external partition, but on the outside of the room.

The flat front supply-return panel (3) is connected to the supply-return connector (7) of the micro-unit (4), and the outdoor air intake-exhaust (6) to the intake-exhaust connector (9) of the micro-unit (4). The flat supply-return front panel (3) has openings located next to each other in such a way that, for one version, the return opening or openings are located centrally or asymmetrically on the front part of the panel, and the return opening is a slot located on the perimeter of the panel. In another version, the supply opening is located along the perimeter of the panel with the return opening, while the supply part is located on the opposite side to the return opening and both are separated from each other by specially profiled and internal partitions.

The flat outdoor air intake-exhaust (6) has a centrally or asymmetrically located exhaust opening or openings on the front wall, and the intake opening is a slot located on the circumference of the outdoor air intake-exhaust. One version of the supply-return connector (7) in the micro-unit (4) is made with an supply section located next to the return section, and both openings are separated from each other by a separating wall/diaphragm. In another version, the supply-return connector (7) has the shape of a centrally or asymmetrically located return opening or openings, on the circumference of which there is a supply opening.

One version of the outdoor air intake-exhaust connector (9) has the shape of a centrally or asymmetrically located exhaust opening or openings on the outside of which the intake opening is located. In another version, the outer air intake-exhaust connector has an intake part located next to the exhaust one and both parts are separated from each other by a separating wall/diaphragm.

The micro-unit (4) is equipped with a single exhaust fan (5) and a set of channels between the outdoor air intake-exhaust (9) and supply-return (7) connectors inside the micro-unit (4) and allowing the correct flow of both air streams in combination with heat/cold recovery from return air.

The exhaust fan (5) is located for one variant of the micro-unit (4) inside the return-exhaust air channel, which is located centrally or asymmetrically in the outdoor air intake-supply air channel ("pipe-in-pipe"). The return-exhaust channel is connected on one side to the asymmetrical or centrally located return opening in the supply-return connector (7) of the micro-unit (4) and runs to the exhaust opening located in the intake-exhaust connection (9) on the other side of the micro-unit (4). Return-exhaust air channel from the exhaust opening to the suction opening of the exhaust fan (5) and from the fan's discharge opening to the exhaust opening, may also have the form of several small diameter channels joined together into one collective channel. For this version, the entire return-exhaust part of the micro-unit (4) is located inside the outdoor air intake-supply channel running from the intake opening in the outdoor air intake-supply connector (9) to the supply opening in the supply-return connector (7) of the micro-unit (4). Heat is transferred between two air streams through a separating wall/diaphragm (8), made of materials with high conductivity. The separating partition (8) may be additionally corrugated, micro-ribbed or additionally ribbed on the outdoor air as well as on the exhaust air side. It can also have a micro- /macro-bubble surface on both sides

In another version, the exhaust fan (5) is mounted in the return-exhaust air channel, which runs alongside with the outdoor air intake-supply channel. The return-exhaust air channel inside the micro-unit (4) is connected on one side to the return opening at the supply-return connector (7) and runs to the exhaust opening in the intake-exhaust connector (9). On the other hand, a parallel outdoor air intake-supply channel runs from the intake opening of the intake-exhaust connector (9) to the supply opening in the supply-return connector (7). Both channels are separated along their entire length by a separating wall/diaphragm (8) through which heat is transferred between two air streams. The separating partition (8) may be additionally corrugated, micro-ribbed or additionally ribbed on the outdoor air as well as on the exhaust air side. It can also have a micro- /macro-bubble surface on both sides.

In justified cases, when the resistances on the supply air side are too high, the exhaust fan (5) may be supported by the supply fan (10). The supply air fan (10) is then located in the outdoor air intake-supply channel, which is connected on one side to the intake opening of the intake-exhaust connector (9) and on the other side to to the supply opening in the supply-return connector (7).

The integrated photovoltaic-wind panel (11), which is the source of power supply for the fully or partially ductless ventilation system, is made of a housing (12), inside which there are specially profiled ventilation channels (13) supplying high-speed outdoor air to the rotor (14) or the rotors (14) centrally located inside housing. Photovoltaic cells (15) are placed on the outer upper surface of the housing. The intake openings (16) of the housing (12) through which air flows into the interior may be located on many sides of the housing, tapering from the entire surface of the side walls of the housing to reduced outlet openings of channels located at appropriate locations in the rotor (14) in a manner that allows its rotation. In the lower part of the housing (12) of the integrated photovoltaic-wind panel (11) there is a base (17), intended for mounting the panel, e.g. on the roof of the facility. In the lower part of the base (17), under the rotor (14), there can be a ventilation channel, which constitutes the exhaust ventilation riser (18). In such a solution, instead of individual exhaust fans (2) in rooms such as bathroom, kitchen, hall, there are exhaust ventilation grilles, which, connected to one air return-exhaust duct from the building, remove the used air outside the building through the integrated photovoltaic-wind panel (11).

The power supply system is additionally equipped with a set of devices converting the obtained solar and wind energy into electricity necessary to supply the system directly, which have not been shown in the drawings.

## Claims

1. Wireless ventilation system, which does not require ventilation ducts in ventilated rooms, with recuperation, powered by an integrated photovoltaic-wind panel and consisting of several decentralized ventilation units (1) and an supportive exhaust fan located outside the ventilated rooms (2), and **characterized in that** the decentralized individual ventilation devices (1) are equipped with: a micro-unit (4) built into the outer wall of the room and equipped with two connectors: outdoor air intake-supply (7) and return-exhaust (9), between which there are exhaust fan (5) and a set of channels on which heat recovery is carried out between two air streams, supply-return front panel which is connected, from the room side, to the air supply-return connector (7) and an outdoor air intake-exhaust unit connected from outer side of the room to the intake-exhaust connector (9).

2. Wireless ventilation system with recuperation, powered by an integrated photovoltaic-wind panel according to claim 1 **characterized by** the fact that inside the micro-unit (4), an exhaust air channel, on which the exhaust fan (5) is mounted, runs between the exhaust opening in the supply-return connector (7) and the exhaust opening in the intake-exhaust connector (9), at the same time, the channel is placed inside the outer, insulated supply air channel, which is connected on one side to the inlet opening at the intake-exhaust connector (9) and supply opening in the supply-return connector (7), this channel that is made of materials that conduct heat well and additionally corrugated, ribbed on both sides or on the outside, or having a micro- / macro-bubble surface constitutes a barrier/diaphragm (8) between two air streams.

3. Wireless ventilation system with recuperation, powered by an integrated photovoltaic-wind panel according to claim 1 is **characterized by** the fact that inside the micro-unit (4), a group of a few exhaust air channels of small diameter runs from several exhaust openings in the intake-exhaust connector (7), before the suction connector of the exhaust fan (5) these channel are joined together into one collective channel, in turn, on the discharge side of the exhaust fan (5), the collective exhaust air channel is split into several smaller diameter channels that run to several exhaust openings located in the intake-exhaust connector (9) of the micro-unit (4); what is more, the set of these elements, i.e. exhaust channels with the exhaust fan (5), is located inside the externally insulated supply air duct, which runs from the intake opening of the intake-exhaust connector (9) to the intake opening of the supply-return connector (7) of the micro-unit (4) at the same time, the exhaust air channels constitute a partition /diaphragm (8) separating between two air streams, made of well heat-conducting materials, on which heat exchange takes place between the two air streams, and which is additionally corrugated, micro-finned, ribbed on both sides or on the outside, or having a **micro- / macro-bubble surface.**

4. Wireless ventilation system with recuperation, powered by an integrated photovoltaic-wind panel according to claim 1 **characterized in that** inside the micro-unit (4), between the exhaust opening in the supply-return connector (7) and the exhaust opening in the intake-exhaust connector (9), a flat exhaust air channel with the exhaust fan in it (5) is mounted, and from the intake opening a flat supply air channel runs in the intake-exhaust connector (9) to the intake opening in the intake-exhaust connector (7), at the same time, both these channels run parallel to each other and adjoin each other along the entire length inside the micro-unit (4) through one separating partition/diaphragm (8), which is made of highly heat-conducting materials and on which heat is exchanged between two air streams, and which is additionally corrugated, micro-finned, ribbed on both sides or on the outside, or having a **micro- / macro-bubble surface.**

5. Wireless ventilation system with recuperation, powered by an integrated photovoltaic-wind panel according to claim 2 **characterized in that** an additional auxiliary supply fan (10) is located in the external supply air duct running in the micro-unit (4) from the intake opening in the intake-exhaust connector (9) to the intake opening in the intake-exhaust connector (7).

6. Wireless ventilation system with recuperation, powered by an integrated photovoltaic-wind panel according to claim 3 **characterized by** the fact that an additional auxiliary supply fan (10) is located in the external supply air channel running in the micro-unit (4) from the intake opening in the intake-exhaust connector (9) to the intake opening in the intake-exhaust connector (7).

7. Wireless ventilation system with recuperation, powered by an integrated photovoltaic-wind panel according to claim 4 **characterized by** the fact that in the supply air channel running in the micro-unit (4) from the intake opening in the intake-exhaust spigot (9) to the intake opening in the intake-exhaust spigot (7) there is an additional auxiliary supply fan (10).

8. Wireless ventilation system with recuperation, powered by an integrated photovoltaic-wind panel according to claim 1 **characterized by** the fact that in the micro-unit (4) from the intake opening in the intake-exhaust connector (9) to the intake opening in the intake-exhaust connector (7), there is a supply air channel inside which an additional auxiliary supply fan (10) is mounted, simultaneously this channel, together with the supply fan (10), is located inside the exhaust channel running from the exhaust opening in the supply-return connector (7) to the discharge opening in the intake-exhaust connector (9) of the micro-unit (4), which also houses the exhaust fan (5), moreover, the supply air channel constitute a partition /diaphragm (8) separating between two air streams, made of well heat-conducting materials, on which heat exchange takes place between the two air streams, and which is additionally corrugated, micro-finned, ribbed on both sides or on the outside, or having a micro- / macro-bubble surface.

9. Wireless ventilation system with recuperation, powered by an integrated photovoltaic-wind panel according to claim 1 is **characterized by** the fact that inside the micro-unit (4) a group of a few exhaust air channels of small diameter runs from several exhaust openings in the intake-exhaust connector (9), before the suction connector of the supply fan (10) these channel are joined together into one collective channel, in turn, on the discharge side of the supply fan (10), the collective exhaust air channel is split into several smaller diameter channels that run to several exhaust openings located in the intake-exhaust connector (7) of the micro-unit (4), what is more of these elements, i.e. the supply channels together with the supply fan (10), is located in the external insulated exhaust air channel, which runs from the exhaust opening of the supply-return connector (7) to the discharge opening of the intake-exhaust connector (9) of the micro-unit (4) and in which there is also an exhaust fan (5), at the same time the supply air channels constitute a partition /diaphragm (8) separating between two air streams, made of well heat-conducting materials, on which heat exchange takes place between the two air streams, and which is additionally corrugated, micro-finned, ribbed on both sides or on the outside, or having a micro- / macro-bubble surface.

10. Wireless ventilation system with recuperation, powered by an integrated photovoltaic-wind panel according to claim 1 is **characterized by** the fact that the flat supply-return front panel (3) has openings located next to each other in such a way that, for one version, the exhaust opening or openings are located centrally or asymmetrically on the front part of the panel, and the exhaust opening is a slot located on the perimeter of the panel for the second version, the supply opening is located along with the exhaust opening on the perimeter of the panel, while the supply part is located on the opposite side to the exhaust opening and both are separated from each other by internal and partitions.

11. Wireless ventilation system with recuperation, powered by an integrated photovoltaic-wind panel according to claim 1 **characterized in that** the flat intake-launcher (6) has a centrally or asymmetrically located discharge opening or openings on the front wall, and the suction opening is a slot located on the circumference of the intake-exhaust.

12. Wireless ventilation system with recuperation, powered by an integrated photovoltaic-wind panel according to claim 1 **characterized in that** the supply-return connector (7) in the micro-unit (4) in one version has an intake part located next to the exhaust and the two openings are separated from each other by a separating wall/diaphragm, in turn, in the second version, the supply-return connector (7) has the shape of a centrally or asymmetrically located vent or vent openings, outside the perimeter of which the vent is located.

13. Wireless ventilation system with recuperation, powered by an integrated photovoltaic-wind panel according to claim 1 **characterized in that** the outdoor air intake-exhaust connector (9) in one version has the shape of a centrally or asymmetrically located exhaust opening or openings, outside of which, in the outer coat, the intake opening is located, while for the other version, the intake-exhaust connector has an intake part located next to the exhaust one and both parts are separated by a partition.

14. Wireless ventilation system with recuperation, powered by an integrated photovoltaic-wind panel according to claim 1**characterized by** the fact, that its source of electricity supply partially or completely comes from an integrated photovoltaic-wind panel (11), which is made of a rectangular housing (12) with photovoltaic cells (15) on its upper surface, lower surface (17) is the base for mounting the panel, e.g. on the roof of the facility, and on the side walls there are four inlet openings (16), through which external air flows at high speed through specially profiled four ventilation channels (13) to the rotor (14) located inside housing, each of the four ventilation channels (13) inside the housing, along the longitudinal cross-section of the housing (12), narrows from the side intake (16) to an opening located on the circumference of the rotor, located in every second quarter of the circle defined by the axis of rotation and the envelope of the rotor and enabling its rotation.

15. Wireless ventilation system with recuperation, powered by an integrated photovoltaic-wind panel according to claim 14 **characterized by** the fact that on the roof of the facility there is a group of photovoltaic-wind panels (11) located at short distances from each other, allowing free air flow to the side intake openings (16) to the housings (12).

16. Wireless ventilation system with recuperation, powered by an integrated photovoltaic-wind panel according to claim 14 **characterized in that** in the lower part of the base (17), under the rotor (14), there is a ventilation channel (18), which is an exhaust ventilation riser, at the same time in such a solution instead of individual exhaust fans (2) in rooms such as bathroom, kitchen, hall there are exhaust ventilation grilles, which are connected to one exhaust air channel (18) allow the used air to be removed outside the building through the integrated photovoltaic-wind panel (11).

17. Wireless ventilation system with recuperation, powered by an integrated photovoltaic-wind panel according to claim 5 **characterized by** the fact that instead of the supply-return front panel (3) an **induction supply-return air conditioning panel** is mounted, in which supplied/fresh air is forced into a branched closed ventilation channel, from which it flows out at high speed through air gaps, causing air from the room to be induced, through a heat exchanger integrated with the induction panel, at the same time, there are return air gaps in the induction panel housing, through which the used air is transferred to the return opening of the supply-return connector (7) of the micro-unit (4), moreover, the exchanger can be **Peltier device** or a **finned lamella heat exchanger,** fed with cooling / heating water or with a refrigerant.

18. Wireless ventilation system with recuperation, powered by an integrated photovoltaic-wind panel according to claim 6 **characterized by** the fact that instead of the supply-return front panel (3) an **induction supply-return air conditioning panel** is mounted, in which supplied/fresh air is forced into a branched closed ventilation channel, from which it flows out at high speed through air gaps, causing air from the room to be induced, through a heat exchanger integrated with the induction panel, at the same time, there are return air gaps in the induction panel housing, through which the used air is transferred to the return opening of the supply-return connector (7) of the micro-unit (4), moreover, the exchanger can be **Peltier device** or a **finned lamella heat exchanger,** fed with cooling / heating water or with a refrigerant.

19. Wireless ventilation system with recuperation, powered by an integrated photovoltaic-wind panel according to claim 7 **characterized by** the fact that instead of the supply-return front panel (3) an **induction supply-return air conditioning panel** is mounted, in which supplied/fresh air is forced into a branched closed ventilation channel, from which it flows out at high speed through air gaps, causing air from the room to be induced, through a heat exchanger integrated with the induction panel, at the same time, there are return air gaps in the induction panel housing, through which the used air is transferred to the return opening of the supply-return connector (7) of the micro-unit (4), moreover, the exchanger can be **Peltier device** or a **finned lamella heat exchanger,** fed with cooling / heating water or with a refrigerant.

20. Wireless ventilation system with recuperation, powered by an integrated photovoltaic-wind panel according to claim 8 **characterized by** the fact that instead of the supply-return front panel (3) an **induction supply-return air conditioning panel** is mounted, in which supplied/fresh air is forced into a branched closed ventilation channel, from which it flows out at high speed through air gaps, causing air from the room to be induced, through a heat exchanger integrated with the induction panel, at the same time, there are return air gaps in the induction panel housing, through which the used air is transferred to the return opening of the supply-return connector (7) of the micro-unit (4), moreover, the exchanger can be **Peltier device** or a **finned lamella heat exchanger,** fed with cooling / heating water or with a refrigerant.

21. Wireless ventilation system with recuperation, powered by an integrated photovoltaic-wind panel according to claim 9 **characterized by** the fact that instead of the supply-return front panel (3) an **induction supply-return air conditioning panel** is mounted, in which supplied/fresh air is forced into a branched closed ventilation channel, from which it flows out at high speed through air gaps, causing air from the room to be induced, through a heat exchanger integrated with the induction panel, at the same time, there are return air gaps in the induction panel housing, through which the used air is transferred to the return opening of the supply-return connector (7) of the micro-unit (4), moreover, the exchanger can be **Peltier device** or a **finned lamella heat exchanger,** fed with cooling / heating water or with a refrigerant.

22. Wireless ventilation system with recuperation, powered by an integrated photovoltaic-wind panel according to claim 17 **characterized by** the fact that instead of the **outdoor air intake-exhaust unit** (6) an **intake-exhaust induction air-conditioning panel** in which the air ejected from the exhaust opening of the intake-exhaust connector (9) of the micro-unit (4) is forced into a branched closed ventilation channel, from which it flows out at high speed through air gaps, causing outdoor/fresh air to be induced, through a heat exchanger integrated with the induction panel, at the same time, there are outdoor intake air gaps in the induction panel housing, through which the fresh air is transferred to the intake opening of the outdoor intake air-exhaust connector (9) of the micro-unit (4), moreover, the exchanger can be **Peltier device** or a **finned lamella heat exchanger,** fed with cooling / heating water or with a refrigerant, and for the latter version, this exchanger is simultaneously connected to the heat exchanger in **the supply-return induction panel** by means of pipes in which the refrigerant circulates and running through the micro-unit (4), at the same time, other elements of the compressor refrigeration system, such as the compressor and expansion element creating a closed, refrigeration cycle.

23. Wireless ventilation system with recuperation, powered by an integrated photovoltaic-wind panel according to claim 18 **characterized by** the fact that instead of the **outdoor air intake-exhaust unit** (6) an **intake-exhaust induction air-conditioning panel** in which the air ejected from the exhaust opening of the intake-exhaust connector (9) of the micro-unit (4) is forced into a branched closed ventilation channel, from which it flows out at high speed through air gaps, causing outdoor/fresh air to be induced, through a heat exchanger integrated with the induction panel, at the same time, there are outdoor intake air gaps in the induction panel housing, through which the fresh air is transferred to the intake opening of the outdoor intake air-exhaust connector (9) of the micro-unit (4), moreover, the exchanger can be **Peltier device** or a **finned lamella heat exchanger,** fed with cooling / heating water or with a refrigerant, and for the latter version, this exchanger is simultaneously connected to the heat exchanger in **the supply-return induction panel** by means of pipes in which the refrigerant circulates and running through the micro-unit (4), at the same time, other elements of the compressor refrigeration system, such as the compressor and expansion element creating a closed, refrigeration cycle.

24. Wireless ventilation system with recuperation, powered by an integrated photovoltaic-wind panel according to claim 19 **characterized by** the fact that instead of the **outdoor air intake-exhaust unit** (6) an **intake-exhaust induction air-conditioning panel** in which the air ejected from the exhaust opening of the intake-exhaust connector (9) of the micro-unit (4) is forced into a branched closed ventilation channel, from which it flows out at high speed through air gaps, causing outdoor/fresh air to be induced, through a heat exchanger integrated with the induction panel, at the same time, there are outdoor intake air gaps in the induction panel housing, through which the fresh air is transferred to the intake opening of the outdoor intake air-exhaust connector (9) of the micro-unit (4), moreover, the exchanger can be **Peltier device** or a **finned lamella heat exchanger,** fed with cooling / heating water or with a refrigerant, and for the latter version, this exchanger is simultaneously connected to the heat exchanger in **the supply-return induction panel** by means of pipes in which the refrigerant circulates and running through the micro-unit (4), at the same time, other elements of the compressor refrigeration system, such as the compressor and expansion element creating a closed, refrigeration cycle.

25. Wireless ventilation system with recuperation, powered by an integrated photovoltaic-wind panel according to claim 20 **characterized by** the fact that instead of the **outdoor air intake-exhaust unit** (6) an **intake-exhaust induction air-conditioning panel** in which the air ejected from the exhaust opening of the intake-exhaust connector (9) of the micro-unit (4) is forced into a branched closed ventilation channel, from which it flows out at high speed through air gaps, causing outdoor/fresh air to be induced, through a heat exchanger integrated with the induction panel, at the same time, there are outdoor intake air gaps in the induction panel housing, through which the fresh air is transferred to the intake opening of the outdoor intake air-exhaust connector (9) of the micro-unit (4), moreover, the exchanger can be **Peltier device** or a **finned lamella heat exchanger,** fed with cooling / heating water or with a refrigerant, and for the latter version, this exchanger is simultaneously connected to the heat exchanger in **the supply-return induction panel** by means of pipes in which the refrigerant circulates and running through the micro-unit (4), at the same time, other elements of the compressor refrigeration system, such as the compressor and expansion element creating a closed, refrigeration cycle.

26. Wireless ventilation system with recuperation, powered by an integrated photovoltaic-wind panel according to claim 20 **characterized by** the fact that instead of the **outdoor air intake-exhaust unit** (6) an **intake-exhaust induction air-conditioning panel** in which the air ejected from the exhaust opening of the intake-exhaust connector (9) of the micro-unit (4) is forced into a branched closed ventilation channel, from which it flows out at high speed through air gaps, causing outdoor/fresh air to be induced, through a heat exchanger integrated with the induction panel, at the same time, there are outdoor intake air gaps in the induction panel housing, through which the fresh air is transferred to the intake opening of the outdoor intake air-exhaust connector (9) of the micro-unit (4), moreover, the exchanger can be **Peltier device** or a **finned lamella heat exchanger,** fed with cooling / heating water or with a refrigerant, and for the latter version, this exchanger is simultaneously connected to the heat exchanger in **the supply-return induction panel** by means of pipes in which the refrigerant circulates and running through the micro-unit (4), at the same time, other elements of the compressor refrigeration system, such as the compressor and expansion element creating a closed, refrigeration cycle.

27. Wireless ventilation system with recuperation, powered by an integrated photovoltaic-wind panel according to claim 1 **characterized by** the fact that the external partition of the ventilated room in which the **micro-unit** (4) is mounted with the **supply-return front panel** (3) and **the outdoor air intake-exhaust unit** (6) can be both opaque and transparent partition.

28. Wireless ventilation system with recuperation, powered by an integrated photovoltaic-wind panel according to claim 8 **characterized in that** the supply-return connector of the micro-unit (4) to which the supply-return front panel (3) is connected, has a centrally or asymmetrically located supply opening located inside the outer cover of the exhaust opening, and the intake-exhaust connector to which the **outdoor air intake-exhaust unit** (6) is connected has a centrally or asymmetrically located intake opening located inside the outer cove of the exhaust opening at the same time the supply-return front panel (3) has centrally or asymmetrically located supply air opening on the front panel wall and an exhaust air slot located on its circumference, an air intake-exhaust unit has centrally or asymmetrically located on the front suction opening and an ejection slot located on its circumference.

29. Wireless ventilation system with recuperation, powered by an integrated photovoltaic-wind panel according to claim 9 **characterized in that** the supply-return connector of the micro-unit (4) to which the supply-return front panel (3) is connected, has centrally or asymmetrically located supply openings inside the outer cover of the return opening, and the intake-exhaust connector to which outdoor air intake-exhaust unit (6) is connected has centrally or asymmetrically located intake openings located inside the outer cove of the exhaust opening, at the same time the supply-return front panel (3) has centrally or asymmetrically located supply air openings on the front panel wall and an exhaust air slot located on its circumference, an air intake-exhaust unit has centrally or asymmetrically located on the front suction openings and an ejection slot located on its circumference.
